(19) Europäisches Patentamt
European Patent Office
Office européen des brevets

(11) **EP 4 725 869 A1**

(12) **EUROPEAN PATENT APPLICATION**
published in accordance with Art. 153(4) EPC

(43) Date of publication:
**15.04.2026 Bulletin 2026/16**

(21) Application number: **24818983.9**

(22) Date of filing: **06.03.2024**

(51) International Patent Classification (IPC):
**B65D 81/38** (2006.01)   **F25D 3/00** (2006.01)
**F28D 20/02** (2006.01)

(52) Cooperative Patent Classification (CPC):
Y02E 60/14

(86) International application number:
**PCT/JP2024/008438**

(87) International publication number:
**WO 2024/252744 (12.12.2024 Gazette 2024/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.06.2023 JP 2023094620**

(71) Applicant: **Panasonic Intellectual Property
Management Co., Ltd.
Kadoma-shi, Osaka 571-0057 (JP)**

(72) Inventors:
• **OMURA, Akihiko
Kadoma-shi, Osaka 571-0057 (JP)**
• **OKAWA, Masafumi
Kadoma-shi, Osaka 571-0057 (JP)**
• **KAWARAZAKI, Hideji
Kadoma-shi, Osaka 571-0057 (JP)**

(74) Representative: **Eisenführ Speiser
Patentanwälte Rechtsanwälte PartGmbB
Postfach 31 02 60
80102 München (DE)**

(54) **HEAT STORAGE PANEL**

(57)     A thermal storage panel (40) includes: a thermal storage pack (41) including a filling bag (41b) that is made of a film and filled with a thermal storage agent (41a); and a storage container (42) accommodating the thermal storage pack. The storage container includes a wall that is larger in thickness than the film and defines a space accommodating the thermal storage pack. An air passage (40i) is located between the wall and the thermal storage pack. The wall includes a first through hole (42c) through which the passage and an outside of the storage container communicate with each other.

FIG. 11

## Description

### Technical Field

The present disclosure relates to a thermal storage panel that maintains an internal temperature of an insulated box for a long period of time.

### Background Art

Conventionally known as a thermal storage panel that keeps contents cool is a cold storage agent-filled container disclosed in PTL 1. This cold storage agent-filled container includes: a container having a hollow portion; and a cold storage agent filled in the hollow portion.

### Citation List

### Patent Literature

PTL 1: Japanese Laid-Open Patent Application Publication No. 2000-334813

### Summary of Invention

### Technical Problem

The container of PTL 1 is a resin molded product manufactured by blow molding. In order to enable cold storage transportation, a wall of the container surrounding the hollow portion is thick. Therefore, it takes a long time to freeze the cold storage agent in the container. Thus, there is a problem in that, in addition to the cold storage agent-filled containers used for the cold storage transportation after freezing, extra cold storage agent-filled containers are necessary to freeze the cold storage agent-filled containers before use.

The present disclosure was made to solve the above problem, and an object of the present disclosure is to provide a thermal storage panel that can reduce a time required to freeze a thermal storage agent while preventing a thermal storage pack from being damaged.

### Solution to Problem

A thermal storage panel according to an aspect of the present invention includes: a thermal storage pack including a filling bag that is made of a film and filled with a thermal storage agent; and a storage container accommodating the thermal storage pack, wherein: the storage container includes a wall that is larger in thickness than the film and defines a space accommodating the thermal storage pack; an air passage is located between the wall and the thermal storage pack; and the wall includes a first through hole through which the passage and an outside of the storage container communicate with each other.

### Advantageous Effects of Invention

According to the present disclosure, since the wall of the storage container is thick, the storage container has rigidity and protects the thermal storage pack in the storage container from external force. Therefore, the thermal storage pack can be prevented from being damaged. Moreover, the thermal storage agent in the thin filling bag is cooled by the cold air flowing into the air passage in the storage container through the first through hole located on the wall of the storage container. Therefore, the time required to freeze the thermal storage pack is reduced.

### Brief Description of Drawings

FIG. 1 is a perspective view showing an insulated box according to Embodiment 1 of the present disclosure.
FIG. 2 is an exploded perspective view of the insulated box.
FIG. 3 is a sectional view showing part of the insulated box.
FIG. 4 is an exploded perspective view of a vacuum insulated panel.
FIG. 5A is a diagram showing a sealant used in a compression set test. FIG. 5B is a diagram showing the sealant that is in a compressed state by compression plates. FIG. 5C is a diagram showing the sealant that has been released from the compressed state.

FIG. 6A is a diagram showing a core formed by four core portions. FIG. 6B is a diagram showing a core formed by six core portions. FIG. 6C is a diagram showing a base of the core portion used in the cores shown in FIGS. 6A and 6B. FIG. 6D is a diagram showing a base of the core portion used in the core shown in FIG. 6B.

FIG. 7 is a sectional view showing part of the vacuum insulated panel according to Modified Example 2.

FIG. 8 is an exploded perspective view showing the insulated box according to Embodiment 2 of the present disclosure.

FIG. 9 is a sectional view of the insulated box.

FIG. 10 is a diagram showing a thermal storage panel as seen from an inner side in a thickness direction.

FIG. 11 is an exploded perspective view of the thermal storage panel.

FIG. 12A is a sectional view of the thermal storage panel. FIG. 12B is a sectional view showing part of the thermal storage panel.

FIG. 13 is a sectional view of the thermal storage panel of Modified Example.

FIG. 14A is a sectional view showing part of the thermal storage panel including a filling bag on which a determination mark is located. FIG. 14B is a diagram showing a state where the determination mark is seen from a second through hole through the thermal storage agent that is not in a frozen state. FIG. 14C is a diagram showing a state where the thermal storage agent that is in the frozen state is seen from the second through hole. FIG. 14D is a sectional view showing part of the thermal storage panel including a storage container on which the determination mark is located.

## Description of Embodiments

Hereinafter, embodiments of the present disclosure will be specifically described with reference to the drawings. In the following description and the drawings, the same reference signs are used for the same or corresponding components, and the repetition of the same explanation is avoided.

## Embodiment 1

### Insulated Box

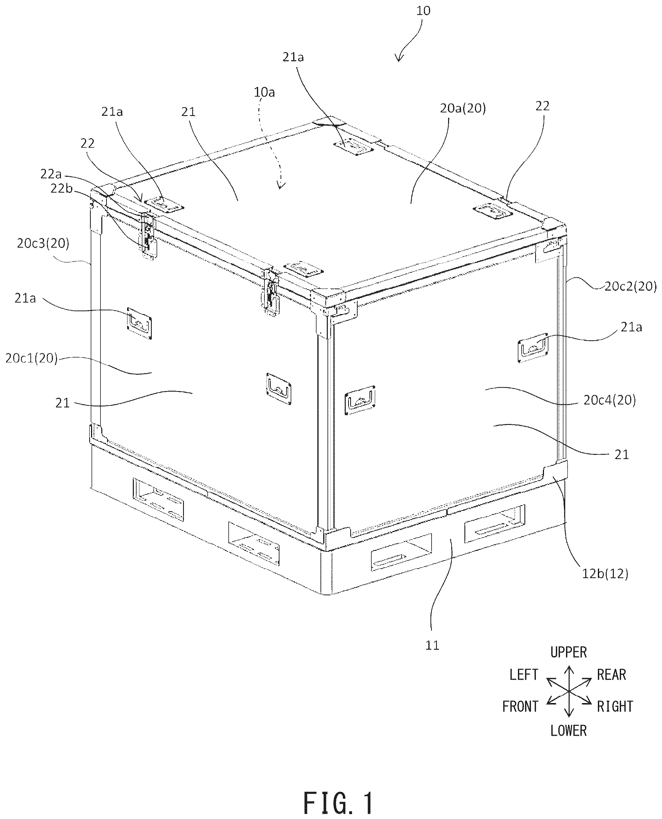

As shown in FIG. 1, an insulated box 10 according to Embodiment 1 is a heat retaining container used to transport or store an article, such as medicine, specimen, or food, accommodated in an insulated space 10a. The following will describe a case where the insulated box 10 is applied to a large container having an accommodating volume of 1,200 L, for example. However, the insulated box 10 is not limited to this. For example, the insulated box 10 may be applied to a portable heat retaining box. Moreover, in the example of FIG. 1, the insulated box 10 is attached to a pallet 11. However, the insulated box 10 may not be attached to the pallet 11.

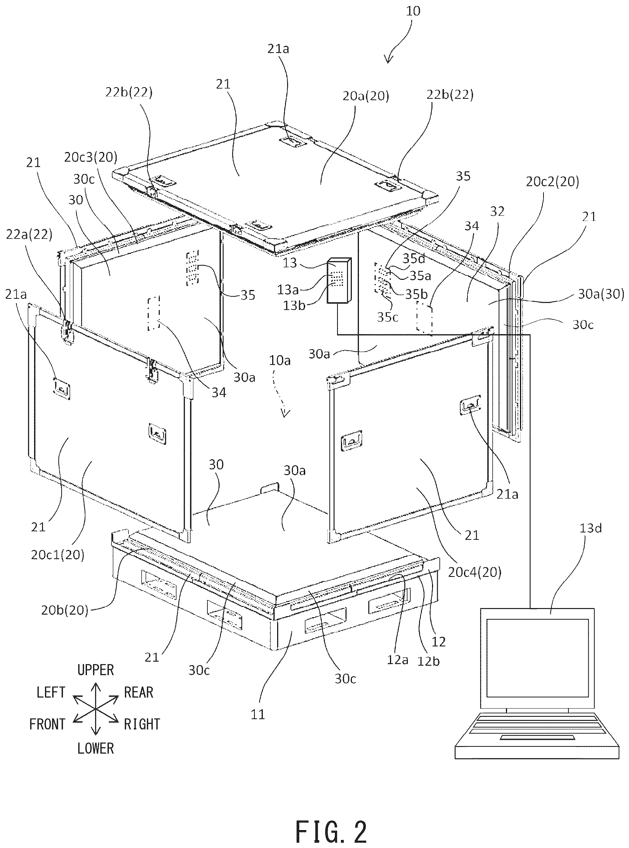

The insulated box 10 has, for example, a cuboid shape and includes: a plurality of (six, for example) insulation boards 20; and the insulated space 10a that is an internal space surrounded by these insulation boards 20. Each insulation board 20 has a rectangular flat plate shape. The insulation boards 20 include an upper insulation board 20a, a lower insulation board 20b (FIG. 2), and four side wall insulation boards 20c1 to 20c4. The side wall insulation boards 20c1 to 20c4 include a front insulation board 20c1, a rear insulation board 20c2, a left insulation board 20c3, and a right insulation board 20c4 and serve as a side wall having a quadrangular tubular shape including an upper opening and a lower opening. The lower insulation board 20b serves as a bottom of the insulated box 10 which covers the lower opening of the side wall. Moreover, the upper insulation board 20a serves as a lid of the insulated box 10 which covers the upper opening of the side wall so as to be able to open and close the upper opening.

### Insulation Board

As shown in FIG. 2, each insulation board 20 includes a vacuum insulated panel 30 and a protective plate 21 that protects the vacuum insulated panel 30. In the insulation board 20, a side where the vacuum insulated panel 30 is located with respect to the protective plate 21 is referred to as an inner side, and its opposite side is referred to as an outer side. An outer surface of the protective plate 21 serves as an outer surface of the insulation board 20, and a first inner surface 30a that is an inner surface of the vacuum insulated panel 30 serves as an inner surface of the insulation board 20. The insulated space 10a of the insulated box 10 is surrounded by the first inner surfaces 30a of the vacuum insulated panels 30 of the six insulation boards 20. Thus, the first inner surfaces 30a define the insulated space 10a.

An outer surface of the lower insulation board 20b and a mounting frame 12 are attached to an upper surface of the pallet 11 having a rectangular flat plate shape. The mounting frame 12 includes: a lower frame 12a having a rectangular flat plate shape; and an outer frame 12b having a rectangular flat plate shape. The lower frame 12a and the outer frame 12b are connected to each other in an L shape. The lower frame 12a is attached to the upper surface of the pallet 11 such that an inner edge of the lower frame 12a extends along an outer peripheral edge of the lower insulation board 20b. The outer frame 12b extends upward from an outer edge of the lower frame 12a. The side wall insulation boards 20c1 to 20c4 are combined with the lower insulation board 20b and extend upward from the lower frame 12a in such a manner that each of lower end portions of the side wall insulation boards 20c1 to 20c4 is inserted between the lower insulation board 20b and the outer frame 12b.

For example, two handles 21a that are recesses are located on each of the outer surfaces of the protective plates 21 of the side wall insulation boards 20c1 to 20c4. Moreover, for example, four handles 21a are located on the outer surface of the protective plate 21 of the upper insulation board 20a located on the side wall insulation boards 20c1 to 20c4. Thus, even when the insulated box 10 is a container, and the insulation boards 20 are large, a user can easily carry and assemble the insulation boards 20 by using the handles 21a.

Moreover, for example, engagement portions 22a of two locks 22 are attached to each of the outer surfaces of the protective plates 21 of the front insulation board 20c1 and the rear insulation board 20c2. Furthermore, for example, engagement portions 22b of the two locks 22 are attached to each of front and rear ends of the protective plate 21 of the upper insulation board 20a. The upper insulation board 20a is fixed to the front insulation board 20c1 and the rear insulation board 20c2 in such a manner that: the engagement portions 22a of the front insulation board 20c1 and the engagement portions 22b of the front end of the upper insulation board 20a are engaged with each other; and the engagement portions 22a of the rear insulation board 20c2 and the engagement portions 22b of the rear end of the upper insulation board 20a are engaged with each other.

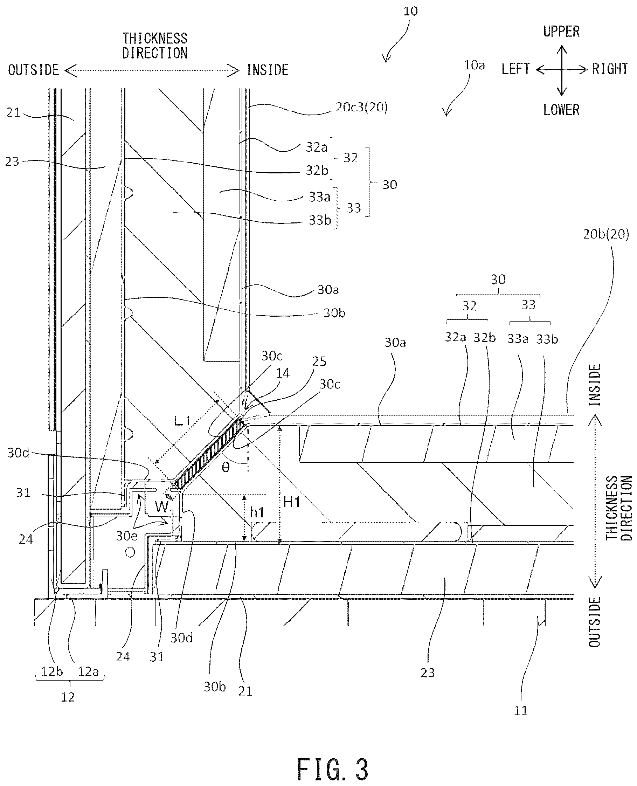

As shown in FIG. 3, in addition to the vacuum insulated panel 30 and the protective plate 21, each insulation board 20 includes an insulator 23 and a protective frame 24. The insulator 23 has a rectangular flat plate shape and is made of a foaming material, such as polyethylene foam. The insulator 23 is located between the vacuum insulated panel 30 and the protective plate 21 in a thickness direction orthogonal to the first inner surface 30a of the vacuum insulated panel 30. In orthogonal directions orthogonal to the thickness direction, the size of the insulator 23 is larger than the size of the vacuum insulated panel 30, and the size of the protective plate 21 is larger than the size of the insulator 23. Therefore, an inner surface of the insulator 23 covers an entire first outer surface 30b that is an outer surface of the vacuum insulated panel 30, and an inner surface of the protective plate 21 covers an entire outer surface of the insulator 23. Thus, the vacuum insulated panel 30 is protected from external force by the insulator 23 and the protective plate 21.

The vacuum insulated panel 30 includes: a first chamfered surface 30d connected to an outer peripheral edge of the first outer surface 30b; and a first flange 31 projecting in the orthogonal directions from the outer peripheral edge of the first outer surface 30b. The first flange 31 is stacked on the insulator 23 in the thickness direction and covered with the protective frame 24. The protective frame 24 is fixed to the inner surface of the protective plate 21. Thus, the vacuum insulated panel 30 and the insulator 23 are attached to the protective plate 21. Moreover, the protective frame 24 surrounds a side surface of the insulator 23 and the first chamfered surface 30d to protect the side surface of the insulator 23 and the first chamfered surface 30d of the vacuum insulated panel 30.

## Vacuum Insulated Panel

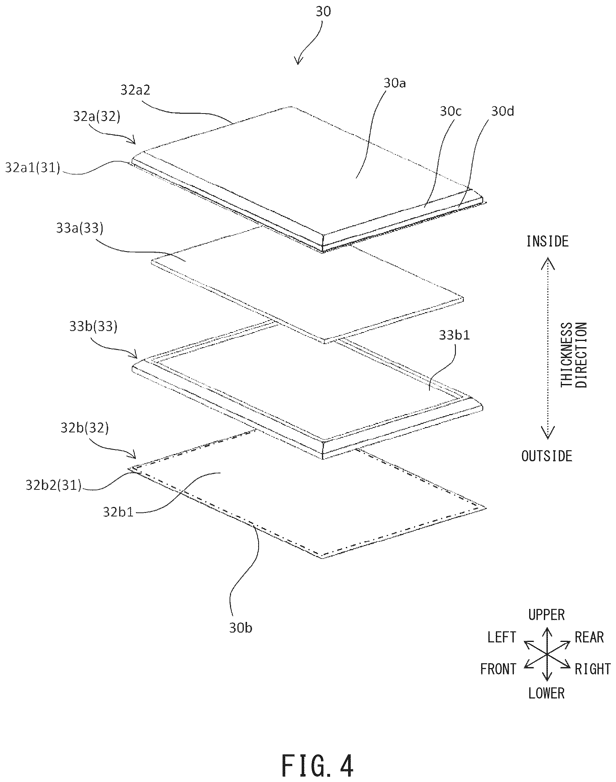

As shown in FIG. 4, the vacuum insulated panel 30 includes: an outer cover 32 including an internal space; and a core 33 accommodated in the internal space of the outer cover 32. The outer cover 32 is a molded body made of a material having a gas barrier property, and the internal space is reduced in pressure to predetermined pressure lower than atmospheric pressure, and sealed. For example, the outer cover 32 has a thickness of 1.0 mm and can adopt a laminated structure including: a thermally weldable thermoplastic resin layer; an air barrier layer made of ethylene-vinyl alcohol copolymer, polyvinyl alcohol polymer, or the like; and a steam barrier layer made of polypropylene or the like.

For example, the outer cover 32 includes a first inner wall 32a and a first outer wall 32b. The first inner wall 32a has a truncated pyramid shape, such as a truncated quadrangular pyramid shape, and includes: a rectangular opening; a first inner wall flange portion 32a1 surrounding the opening; and a first inner wall recessed portion 32a2 that is recessed inward in the thickness direction from the first inner wall flange portion 32a1. Moreover, the first outer wall 32b has a rectangular flat plate shape and includes: a first covering portion 32b1 covering the opening of the first inner wall 32a; and a first outer wall flange portion 32b2 surrounding the first covering portion 32b1. The first outer wall flange portion 32b2 is the same in shape and size as the first inner wall flange portion 32a1. The first inner wall 32a is formed by, for example, vacuum forming. Therefore, the outer cover 32 can be manufactured at low cost without using an expensive forming mold for blow molding, injection molding, or the like.

The core 33 is accommodated in the internal space of the outer cover 32 in such a manner that: in the outer cover 32, the core 33 is inserted into the first inner wall recessed portion 32a2 through the opening of the first inner wall 32a; and the opening of the first inner wall 32a is covered with the first covering portion 32b1 of the first outer wall 32b. Then, the first inner wall flange portion 32a1 and the first outer wall flange portion 32b2 are stacked on each other and subjected to thermal welding. The first flange 31 is formed by the first inner wall flange portion 32a1 and the first outer wall flange portion 32b2 which have been subjected to the thermal welding. Moreover, the first inner surface 30a, a first inclined surface 30c, and the first chamfered surface 30d of the vacuum insulated panel 30 are formed by a surface opposite to a surface opposed to the first outer wall 32b in the thickness direction among surfaces of the first inner wall recessed portion 32a2 of the first inner wall 32a. Furthermore, the first outer surface 30b of the vacuum insulated panel 30 is formed by a surface opposite to a surface opposed to the first inner wall 32a in the thickness direction among surfaces of the first covering portion 32b1 of the first outer wall 32b. Then, air in the internal space of the outer cover 32 is drawn through a suction port located on the first inner wall 32a or the first outer wall 32b. Thus, the internal space of the outer cover 32 is reduced in pressure. Then, the suction port is sealed by a sealing member. Thus, the internal space of the outer cover 32 is sealed.

The core 33 is made of a porous material having low thermal conductivity, serves as a framework of the vacuum insulated panel 30, and defines the internal space of the outer cover 32. The core 33 includes: a first core layer 33a made of glass wool; and a second core layer 33b made of open-cell foam, such as polyurethane foam having an open-cell structure. The second core layer 33b has a truncated pyramid shape, such as a truncated quadrangular pyramid shape, and includes an inner surface and a core recess 33b1 that is recessed from the inner surface. The first core layer 33a has a rectangular flat plate shape and is accommodated in the core recess 33b1 of the second core layer 33b. This forms the core 33 having a truncated pyramid shape, such as a truncated quadrangular pyramid shape.

As above, the core 33 is constituted by the two core layers 33a and 33b stacked on each other in the thickness direction. However, the core 33 may be constituted by one core 33 or may be constituted by three or more core layers stacked on each other in the thickness direction. Moreover, the materials of the core 33 are not limited to the glass wool and the polyurethane foam having the open-cell structure. The core 33 may be constituted by an aggregate of glass fibers and a porous body, such as an aggregate of inorganic fine particles.

Moreover, as shown in FIG. 2, a gas adsorbent 34 may be accommodated in the internal space of the outer cover 32 of the vacuum insulated panel 30. For example, the core 33 of the vacuum insulated panel 30 is recessed outward in the thickness direction from an inner surface of the core 33, and the gas adsorbent 34 is located in the recess and covered with the outer cover 32. The gas adsorbent 34 absorbs gas, such as steam and air, which remains in or enters the internal space of the outer cover 32. Thus, the pressure in the internal space of the outer cover 32 can be kept low.

Furthermore, a pressure sensor 35 may be accommodated in the internal space of the outer cover 32 of the vacuum insulated panel 30. The pressure sensor 35 includes a pressure detector 35a, a transmitter 35b, a power feeder 35c, and a sensor case 35d that accommodates these components. When the pressure sensor 35 is accommodated in the outer cover 32, the outer cover 32 is made of a non-metal material, such as synthetic resin, through which radio waves for wireless communication can pass. Thus, the pressure detected by the pressure sensor 35 can be transmitted wirelessly to the outside of the outer cover 32.

The pressure detector 35a includes, for example, a heater and a thermocouple. The pressure detector 35a measures the atmospheric pressure (degree of vacuum) in the internal space of the outer cover 32 in such a manner that heat conduction properties of surroundings are measured from temperature detected by the thermocouple when the heater is heated. However, the configuration of the pressure detector 35a is not limited to this, and a Micro-Electro-Mechanical System (MEMS) of a piezoelectric type, an electrostatic capacitance type, a vibration type, or the like may be adopted.

The transmitter 35b is electrically connected to the pressure detector 35a and transmits information regarding the pressure detected by the pressure detector 35a, to the outside of the outer cover 32 through wireless communication. To do this, the transmitter 35b includes a communication control IC, a memory, an antenna, and the like. For example, the transmitter 35b is a near field communication device that uses a 13.56 MHz frequency band, and transmits information by NFC (Near Field Communication).

The power feeder 35c is electrically connected to the pressure detector 35a and the transmitter 35b and supplies electric power to the pressure detector 35a and the transmitter 35b. For example, the power feeder 35c includes a power feed control IC and a power receiver for wireless power feed based on magnetic resonance. The power receiver includes a secondary coil (power receiving coil) that receives electric power in a non-contact manner from a primary coil (power transmitting coil) located outside the outer cover 32. The power receiving coil receives electric power transmitted from the power transmitting coil, and the power feed control IC supplies this electric power to the pressure detector 35a and the transmitter 35b.

The sensor case 35d is made of a non-metal material, such as resin. The sensor case 35d has, for example, a flat plate shape in the thickness direction. The sensor case 35d communicates the inside with the outside through a plurality of through holes. The pressure sensors 35 are located in the respective vacuum insulated panels 30 of the insulated box 10. In the internal space of the outer cover 32 of the vacuum insulated panel 30, the core 33 is recessed outward in the thickness direction from the inner surface of the core 33, and the pressure sensor 35 is located in this recess and covered with the outer cover 32. Thus, the pressure sensor 35 is located closer to the first inner surface 30a in the thickness direction than to the first outer surface 30b.

As shown in FIG. 2, the thermal insulation performance of the vacuum insulated panel 30 is inspected by using a tester 13. The tester 13 includes a receiver 13a and a power transmitter 13b and is connected to a computer 13d. The receiver 13a includes, for example, a communication control IC, a memory, an antenna, and the like. The receiver 13a can communicate with the transmitter 35b included in the pressure sensor 35 of the vacuum insulated panel 30 through, for example, the NFC. Moreover, the power transmitter 13b includes the power transmitting coil that serves as the primary coil. The power transmitter 13b generates a magnetic field by power feed from a power supply.

In the inspection of the thermal insulation performance of the vacuum insulated panel 30 by the tester 13, the user brings the tester 13 into contact with the first inner surface 30a of the vacuum insulated panel 30 such that the tester 13 is opposed to the pressure sensor 35 through the outer cover 32 of the vacuum insulated panel 30. In this state, when the user supplies electric power to the power transmitter 13b of the tester 13, the power transmitter 13b generates the magnetic field, and electromagnetic induction occurs in the secondary coil (power receiving coil) included in the power feeder 35c of the vacuum insulated panel 30. Thus, the pressure sensor 35 is supplied with the electric power. By the electric power supplied as above, the pressure sensor 35 detects the pressure by the pressure detector 35a and transmits information regarding the detected pressure by the transmitter 35b. The transmitted information is received by the receiver 13a of the tester 13 and is then transmitted to the computer 13d. The computer 13d determines based on the input information whether or not the thermal insulation performance of the vacuum insulated panel 30 is acceptable, and outputs (displays, for example) the result of the determination. As above, the user can inspect the thermal insulation performance of the vacuum insulated panel 30.

At least a portion of the protective plate 21 which is opposed to the pressure sensor 35 may be made of a material, such as resin, through which radio waves for wireless communication can pass. In this case, the user brings the tester 13 into contact with the outer surface of the resin portion of the protective plate 21. Thus, the tester 13 can wirelessly communicate with the pressure sensor 35 by being opposed to the pressure sensor 35 through the resin portion of the protective plate 21 and the outer cover 32 of the vacuum insulated panel 30. Therefore, the tester 13 can inspect the thermal insulation performance of the vacuum insulated panel 30 by receiving the pressure detected by the pressure sensor 35.

As shown in FIGS. 2 and 3, the vacuum insulated panel 30 has a truncated pyramid shape, such as a truncated quadrangular pyramid shape, and includes the first inner surface 30a, the first outer surface 30b, the first inclined surface 30c, and the first chamfered surface 30d. The first inner surface 30a and the first outer surface 30b are rectangular and orthogonal to the thickness direction. The first inner surface 30a of the vacuum insulated panel 30 is formed by the first inner wall 32a of the outer cover 32 and serves as the inner surface of the insulation board 20. The first outer surface 30b of the vacuum insulated panel 30 is formed by the first covering portion 32b1 (FIG. 4) of the first outer wall 32b of the outer cover 32. The first outer surface 30b is a surface located at an opposite side to the first inner surface 30a across the core 33 in the thickness direction. The first outer surface 30b is opposed to the inner surface of the insulator 23 in the insulation board 20. The area of the first outer surface 30b is larger than the area of the first inner surface 30a. The first flange 31 spreads from the outer peripheral edge of the first outer surface 30b so as to surround the first outer surface 30b of the vacuum insulated panel 30.

The outer end of the first chamfered surface 30d is connected to the outer peripheral edge of the first outer surface 30b. The first chamfered surface 30d extends inward in the thickness direction from the outer peripheral edge of the first outer surface 30b. The outer end of the first inclined surface 30c is connected to the inner end of the first chamfered surface 30d. The inner end of the first inclined surface 30c is connected to the outer peripheral edge of the first inner surface 30a. The first inclined surface 30c is inclined relative to the thickness direction and the orthogonal directions. An inclination angle $\theta$ of the first inclined surface 30c relative to the thickness direction is 45 degrees. By this first inclined surface 30c, the area of a section of the vacuum insulated panel 30 which is orthogonal to the thickness direction increases from the first inner surface 30a toward the first outer surface 30b in the thickness direction, i.e., outward in the thickness direction.

When forming the insulated box 10 by the insulation boards 20 including the vacuum insulated panels 30, the first inclined surfaces 30c of the vacuum insulated panels 30 located adjacent to each other are opposed to each other. In the example of FIG. 3, the vacuum insulated panel 30 of the lower insulation board 20b and the vacuum insulated panel 30 of the left insulation board 20c3 are located adjacent to each other, and the first inclined surface 30c of the lower insulation board 20b and the first inclined surface 30c of the left insulation board 20c3 are opposed to each other. These first inclined surfaces 30c opposed to each other are located in parallel with each other.

As with the lower insulation board 20b and the left insulation board 20c3, the vacuum insulated panel 30 of the lower insulation board 20b shown in FIG. 2 is located adjacent to the vacuum insulated panels 30 of the front insulation board 20c1, the rear insulation board 20c2, and the right insulation board 20c4, and the first inclined surface 30c of the vacuum insulated panel 30 of the lower insulation board 20b is opposed to the first inclined surfaces 30c of the vacuum insulated panels 30 of the insulation boards 20c1, 20c2, and 20c4. Moreover, the vacuum insulated panel 30 of the upper insulation board 20a is located adjacent to the side wall insulation boards 20c1 to 20c4, and the first inclined surface 30c of the vacuum insulated panel 30 of the upper insulation board 20a is opposed to the first inclined surfaces 30c of the side wall insulation boards 20c1 to 20c4.

Moreover, the vacuum insulated panel 30 of the front insulation board 20c1 is located adjacent to the vacuum insulated panels 30 of the left insulation board 20c3 and the right insulation board 20c4, and the first inclined surface 30c of the vacuum insulated panel 30 of the front insulation board 20c1 is opposed to the first inclined surfaces 30c of the vacuum insulated panels 30 of the insulation boards 20c3 and 20c4. Furthermore, the vacuum insulated panel 30 of the rear insulation board 20c2 is located adjacent to the vacuum insulated panels 30 of the left insulation board 20c3 and the right insulation board 20c4, and the first inclined surface 30c of the vacuum insulated panel 30 of the rear insulation board 20c2 is opposed to the first inclined surfaces 30c of the vacuum insulated panels 30 of the insulation boards 20c3 and 20c4.

Since the first inclined surface 30c is inclined relative to the first inner surface 30a and the first chamfered surface 30d as shown in FIG. 3, each of the angle of a corner between the first inner surface 30a and the first inclined surface 30c and the angle of a corner between the first inclined surface 30c and the first chamfered surface 30d is larger than 90 degrees. Thus, even if the corner of one of the vacuum insulated panels 30 hits the other when assembling the vacuum insulated panels 30 such that the first inclined surfaces 30c are opposed to each other, the vacuum insulated panel 30 can be prevented from being damaged. Therefore, the work of assembling the insulated box 10 using the vacuum insulated panels 30 can be easily performed.

Moreover, a gap between the first inclined surface 30c of the lower insulation board 20b and the outer frame 12b increases upward. Therefore, even when the side wall insulation boards 20c1 to 20c4 are inclined, the lower end portions of the side wall insulation boards 20c1 to 20c4 are easily inserted into this gap without hitting the lower insulation board 20b. Thus, the work of assembling the insulated box 10 using the vacuum insulated panels 30 can be easily performed. Furthermore, even when the insulated box 10 is a large insulated box, such as a container, and the vacuum insulated panel 30 tends to be inclined significantly, the vacuum insulated panel 30 is prevented from being damaged by the corner, and this can improve the ease of work of assembling the insulated box 10.

Moreover, in a state where the side wall insulation boards 20c1 to 20c4 are inclined such that the upper portions thereof are inclined outward in the thickness direction, while inserting the lower end portions of the side wall insulation boards 20c1 to 20c4 into the gap between the first inclined surface 30c of the lower insulation board 20b and the outer frame 12b, the inclinations of the side wall insulation boards 20c1 to 20c4 can be adjusted such that the side wall insulation boards 20c1 to 20c4 become parallel to an upper-lower direction. Thus, the ease of work of assembling the insulated box 10 can be improved by adjusting the inclinations of the vacuum insulated panels 30 while inserting the lower end portions of the vacuum insulated panels 30 as above.

A dimension h1 of the first chamfered surface 30d in the thickness direction satisfies a formula "$h1<(1-\sqrt{2}/2)H1$," where H1 denotes a dimension of the vacuum insulated panel 30 in the thickness direction. The dimension H1 is a dimension between the first inner surface 30a and the first outer surface 30b of the vacuum insulated panel 30 in the thickness direction. Thus, a dimension L1 between an outer end and an inner end of the first inclined surface 30c is larger than the dimension H1 of the vacuum insulated panel 30. Therefore, between the insulated space 10a surrounded by the vacuum insulated panels 30 and the outside of the insulated space 10a, the dimension L1 of a heat transfer passage 14 that is a gap between the first inclined surfaces 30c opposed to each other is longer than the dimension H1. Thus, the heat transfer between the insulated space 10a and the outside of the insulated space 10a through the heat transfer passage 14 can be reduced, and the temperature change in the insulated space 10a can be reduced.

Moreover, the first flanges 31 of the vacuum insulated panels 30 located adjacent to each other can be prevented from contacting each other by the first chamfered surfaces 30d. To be specific, in the example of FIG. 3, the corner between the first outer surface 30b and the first inclined surface 30c of the vacuum insulated panel 30 is chamfered. Thus, the first chamfered surface 30d is formed between the first outer surface 30b and the first inclined surface 30c, and a first chamfered space 30e is formed among the first chamfered surface 30d, an extended plane of the first outer surface 30b, and an extended plane of the first inclined surface 30c. The first flange 31 projecting leftward from the first outer surface 30b of the lower insulation board 20b is accommodated in the first chamfered space 30e. Moreover, the first flange 31 projecting downward from the first outer surface 30b of the left insulation board 20c3 is accommodated in the first chamfered space 30e. Thus, the first flange 31 of the lower insulation board 20b and the first flange 31 of the left insulation board 20c3 do not contact each other, and the gap between the first inclined surface 30c of the lower insulation board 20b and the first inclined surface 30c of the left insulation board 20c3 can be made as small as possible in a state where these first inclined surfaces 30c are opposed to each other. Therefore, a dimension W of the heat transfer passage 14 between the first inclined surfaces 30c opposed to each other can be made small. In addition, the heat transfer through the heat transfer passage 14 can be reduced, and the temperature change in the insulated space 10a can be reduced.

### Sealant

As shown in FIG. 3, the insulated box 10 further includes a sealant 25 located between the first inclined surfaces 30c. The sealant 25 is made of, for example, a porous body and has a sheet shape having a small thickness. The sealant 25 is attached to the first inclined surfaces 30c with an adhesive or the like. The gap between the first inclined surfaces 30c is formed by the dimensional error of the vacuum insulated panel 30 or the assembly error of the insulation board 20. Even in this case, the sealant 25 is interposed between the first inclined surfaces 30c to reduce the flow of the air in the heat transfer passage 14 that is the gap. Thus, the heat transfer to the insulated space 10a by the flow of the air can be suppressed, and the temperature change in the insulated space 10a can be reduced.

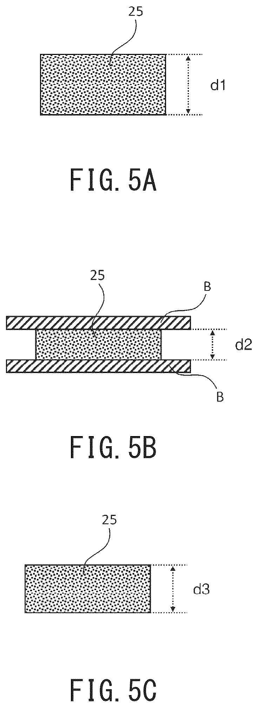

A compression set of the sealant 25 is 60% or less. The compression set is measured in the following compression set test by using the sealant 25 shown in FIG. 5A, for example. The sealant 25 has a thickness d1 that is 10 mm. The sealant 25 has a size of 50 mm × 50 mm in the orthogonal directions. As shown in FIG. 5B, the sealant 25 is sandwiched and compressed by two aluminum compression plates B at a temperature of 5°C such that a thickness d2 of the sealant 25 becomes 1 mm. The sealant 25 in this compressed state is left as is for 2, 5, 22, 72, or 220 hours in a thermostatic tank that is maintained at an ambient temperature of 5°C. After this constant temperature test, as shown in FIG. 5C, the sealant 25 is taken out from between the two compression plates B at a temperature of 5°C and is left as is for 24 hours from the release from the compressed state. Then, a thickness d3 of the sealant 25 is measured.

In many cases, the insulated box 10 is stored in a warehouse at 5°C, and the work of opening and closing the insulated box 10 is also performed in the warehouse at 5°C. Therefore, the compression set test for the sealant 25 is performed at 5°C. However, the temperature of the compression set test for the sealant 25 is not limited to this and is determined in accordance with a temperature range in which the sealant 25 is used. For example, when the work of opening and closing the insulated box 10 is performed at 20°C, the compression set test for the sealant 25 may be performed at 20°C.

The compression set of the sealant 25 which has been subjected to the compression set test is calculated by the following formula. In this formula, d1 denotes the thickness of the sealant 25 before the compression as shown in FIG. 5A, d2 denotes the thickness of the sealant 25 in the compressed state before the constant temperature test as shown in FIG. 5B, and d3 denotes the thickness of the sealant 25 that has been left as is for 30 minutes from the release from the compressed state after the constant temperature test as shown in FIG. 5C. In the above compression set test, the thickness d1 is 10 mm, and the thickness d2 is 1 mm. Therefore, the compression set of the sealant 25 is calculated by the measured thickness d3.

$$\text{Compression Set } (\%) = (d1-d3)/(d1-d2) \times 100$$

When the compression set calculated as above is 60% or less, the sealant 25 can seal the gap between the first inclined surfaces 30c of the vacuum insulated panels 30. To be specific, for example, due to the dimensional error of the vacuum insulated panel 30, the design accuracy is ±1 mm from a nominal design value. Moreover, due to the assembly error of the insulation board 20, the assembly accuracy is ±1 mm from the nominal design value. In this case, the designed value of the gap between the first inclined surfaces 30c of the vacuum insulated panels 30 is 3 mm ±2 mm. Therefore, the maximum value of the gap is 5 mm, and the minimum value of the gap is 1 mm.

For example, when the gap between the first inclined surfaces 30c is 1 mm that is the minimum value, the sealant 25 located in this gap has a thickness of 1 mm that is the thickness d2 of the sealant 25 in the most compressed state. Since the compression set of the sealant 25 is 60% or less, the thickness d3 of the sealant 25 after the release from the compression is 5.4 mm or more. This thickness is larger than the maximum value of the gap. Therefore, even when the gap between the first inclined surfaces 30c assembled next is 5 mm that is the maximum value, the sealant 25 located in the gap can seal the gap. Thus, the heat transfer to the insulated space 10a by the flow of the air in the heat transfer passage 14 that is the gap can be reduced, and the temperature change in the insulated space 10a can be reduced.

Moreover, the thickness d1 of the sealant 25 is 10 mm or more since the sealant 25 is used at a compression rate of 50% or more to secure airtightness. The compression set of such sealant 25 is 60% or less, further preferably 55.6% or less. Therefore, since the compression rate of the sealant 25 is 50% or more in the gap of 1 mm or more and 5 mm or less, the sealant 25 in a compressed state can secure the airtightness in the gap and seal the gap. Thus, the heat transfer to the insulated space 10a by the flow of the air in the heat transfer passage 14 that is the gap can be reduced, and the temperature change in the insulated space 10a can be reduced.

In the above configuration, since the maximum value of the gap between the first inclined surfaces 30c is 5 mm, the thickness of the sealant 25 is 10 mm or more. However, the thickness of the sealant 25 is not limited to this. Moreover, the sealant 25 having a thickness of 10 mm or more may be located on only one of the first inclined surfaces 30c opposed to each other. Furthermore, the sealants 25 each having a thickness of 5 mm or more may be located on the respective first inclined surfaces 30c opposed to each other. In this case, the two sealants 25 may be located in the gap between the first inclined surfaces 30c opposed to each other, and the total thickness of the sealants 25 may be 10 mm or more.

Moreover, since the compression set of the sealant 25 is 60% or less, i.e., small, the sealant 25 has a high recovery rate. For example, according to the insulated box 10 including the insulation boards 20 that are repeatedly assembled and disassembled, the dimension W of the gap between the first inclined surfaces 30c opposed to each other changes each time the insulated box 10 is assembled. Even when the dimension W of the gap varies as above, the sealant 25 recovers each time the insulated box 10 is disassembled. Therefore, the sealant 25 can seal the gap having the maximum dimension.

Moreover, the sealant 25 has a compressive strength of 3 N/cm$^2$ or less when compressed by 50%. As shown in FIG. 1, the upper insulation board 20a is fixed to the front insulation board 20c1 and the rear insulation board 20c2 by the locks 22. In this case, a compressive strength P of the sealant 25 compressed by 50% is represented by the following formula, where F denotes a tensile load of the lock 22, n denotes the number of locks 22, X denotes the weight of the upper insulation board 20a, and A denotes a contact surface area between the upper insulation board 20a and the sealant 25.

$$P \leq (F \cdot n + X \cdot 9.8) \cdot \cos 45° / A$$

For example, the tensile load F of the lock 22 is 1,500 (N), the number n of locks 22 is four, the weight X of the upper insulation board 20a is 16.8 (kg), and the contact surface area A between the upper insulation board 20a and the sealant 25 is 1,503 (cm$^2$). In this case, the compressive strength P of the sealant 25 compressed by 50% is 3 N/cm$^2$ or less, more preferably 2.9 (N/cm$^2$) or less. Thus, since the compression rate of the sealant 25 is 50% or more, the sealant 25 can secure the airtightness in the gap and seal the gap. Therefore, the heat transfer to the insulated space 10a by the flow of the air in the heat transfer passage 14 that is the gap can be reduced, and the temperature change in the insulated space 10a can be reduced.

Moreover, the sealant 25 is made of foam rubber, more preferably foamed ethylene propylene rubber. According to the sealant 25 made of the foamed ethylene propylene rubber, the compression set of the sealant 25 is 60% or less, and the compressive strength of the sealant 25 compressed by 50% is 3 N/cm$^2$ or less. Thus, the sealant 25 has a high recovery rate and is compressed in the gap between the first inclined surfaces 30c by 50% or more. Therefore, even when the dimension of the gap varies, the sealant 25 seals the gap. Thus, the heat transfer to the insulated space 10a by the flow of the air in the heat transfer passage 14 that is the gap can be reduced, and the temperature change in the insulated space 10a can be reduced.

**Modified Example 1**

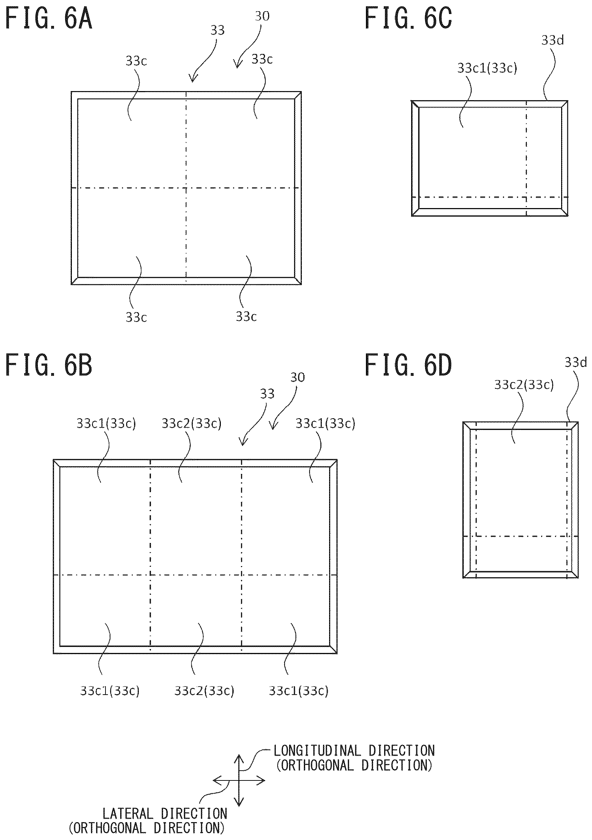

As shown in FIGS. 6A and 6B, the core 33 of the vacuum insulated panel 30 may be formed by a plurality of core portions 33c lined up in the orthogonal directions. In the core 33 in the example of FIG. 6A, two core portions 33c are lined up in one direction (lateral direction) among the orthogonal directions, and two core portions 33c are lined up in a longitudinal direction orthogonal to the lateral direction. In the core 33 in the example of FIG. 6B, three core portions 33c are lined up in the lateral direction among the orthogonal directions, and two core portions 33c are lined up in the longitudinal direction among the orthogonal directions. As the sizes of the core portion 33c and the core 33 increase, the warping thereof increases. Therefore, the warping of the core 33 formed by a plurality of small core portions 33c becomes smaller than the warping of one large core 33. Thus, the warping of the core 33 formed by a plurality of core portions 33c can be reduced.

Each core portion 33c in the example of FIG. 6A is formed in such a manner that, for example, regarding a base 33d of the core portion 33c having the truncated pyramid shape in FIG. 6C, one of a pair of sides extending in the lateral direction and one of a pair of sides extending in the longitudinal direction are cut. Then, two core portions 33c are lined up in each of the lateral direction and the longitudinal direction such that the cut surfaces of the core portions 33c are opposed to each other. Thus, the core 33 having the truncated pyramid shape is formed.

A core portion 33c2 located at the middle among the three core portions 33c lined up in the lateral direction in the example of FIG. 6B is formed in such a manner that regarding the base 33d having the truncated pyramid shape in FIG. 6D, one of a pair of sides extending in the lateral direction and both of a pair of sides extending in the longitudinal direction are cut. Moreover, among the three core portions 33c, each of two core portions 33c1 sandwiching the core portion 33c2 can be formed in such a manner that the base 33d shown in FIG. 6C is cut in the same manner as the core portion 33c shown in FIG. 6A. One of the core portions 33c lined up in the longitudinal direction is formed smaller than the other. Then, the core 33 having the truncated pyramid shape is formed in such a manner that three core portions 33c1, 33c2, and 33c1 are lined up in the lateral direction, two core portions 33c1 are lined up in the longitudinal direction, and two core portions 33c2 are lined up in the longitudinal direction such that the cut surfaces of the core portions 33c1 and 33c2 are opposed to each other.

By adjusting the number of core portions 33c and the sizes of the core portions 33c, the cores 33 of various shapes and sizes can be formed. The core 33 larger than the base 33d is formed by a plurality of core portions 33c each of which is smaller than the base 33d. Therefore, the size of a mold for the base 33d is smaller than the size of a mold for the core 33. Thus, the cost for the mold can be suppressed. Moreover, plural types of core portions 33c are formed by cutting one type of base 33d. Therefore, the number of molds for the base 33d can be made smaller than a case where molds are prepared for the respective core portions 33c. This can reduce the cost for the molds. Thus, the cores 33 can be produced at low cost.

The core portion 33c is made of polyurethane foam having an open-cell structure. The polyurethane foam having the open-cell structure contains a plurality of cells communicating with each other. Since the cells communicate with each other, air can be discharged from the cells of the core portion 33c accommodated in the outer cover 32. Thus, the degree of vacuum in the outer cover 32 can be increased, and this can improve the thermal insulation property of the vacuum insulated panel 30.

Moreover, the polyurethane foam having the open-cell structure is porous synthetic resin foam containing cells and is integrally formed. Therefore, the polyurethane foam is cut more easily than an aggregate of glass fibers, silica powder, and the like. Thus, the core portion 33c can be easily formed by cutting the base 33d made of the polyurethane foam having the open-cell structure.

In the above configuration, one core 33 accommodated in the outer cover 32 is formed by a plurality of core portions 33c. It should be noted that as shown in the example of FIG. 4, the core 33 may include the first core layer 33a and the second core layer 33b which are stacked on each other in the thickness direction. In this case, at least one of the first core layer 33a or the second core layer 33b may be formed by a plurality of core portions 33c lined up in the orthogonal directions.

**Modified Example 2**

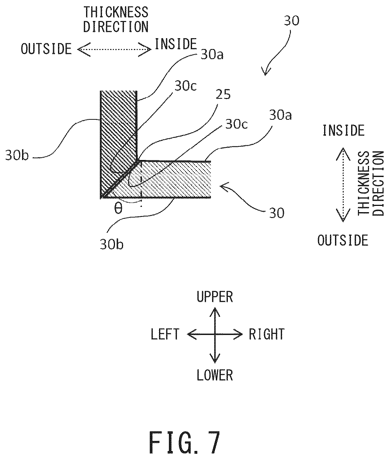

As shown in FIG. 7, the vacuum insulated panel 30 does not have to include the first chamfered surface 30d (FIG. 3). In this case, the vacuum insulated panel 30 includes the first inner surface 30a, the first outer surface 30b, and the first inclined surface 30c. The outer end of the first inclined surface 30c is connected to the outer peripheral edge of the first outer surface 30b. The inner end of the first inclined surface 30c is connected to the outer peripheral edge of the first inner surface 30a. The first inclined surface 30c is inclined relative to the thickness direction and the orthogonal directions. The inclination angle θ of the first inclined surface 30c relative to the thickness direction is 45 degrees. When forming the insulated box 10 by using the insulation boards 20 including the vacuum insulated panels 30, the first inclined surfaces 30c of the vacuum insulated panel 30 located adjacent to each other are opposed to each other. Thus, the vacuum insulated panels 30 can be prevented from being damaged, and the work of assembling the insulated box 10 using the vacuum insulated panels 30 can be easily performed.

Moreover, the outer cover 32 of the vacuum insulated panel 30 is formed by, for example, blow molding, and does not include the first flange 31. Therefore, even when the vacuum insulated panel 30 does not include the first chamfered surface 30d, the first flanges 31 of the vacuum insulated panels 30 located adjacent to each other do not collide with each other. Thus, the first inclined surfaces 30c can be opposed to each other. The heat transfer passage 14 between the first inclined surfaces 30c of the vacuum insulated panels 30 is longer than that of the vacuum insulated panels 30 including the first chamfered surfaces 30d. Therefore, the heat transfer through the heat transfer passage 14 can be reduced, and the temperature change in the insulated space 10a can be reduced.

**Embodiment 2**

**Insulated Box**

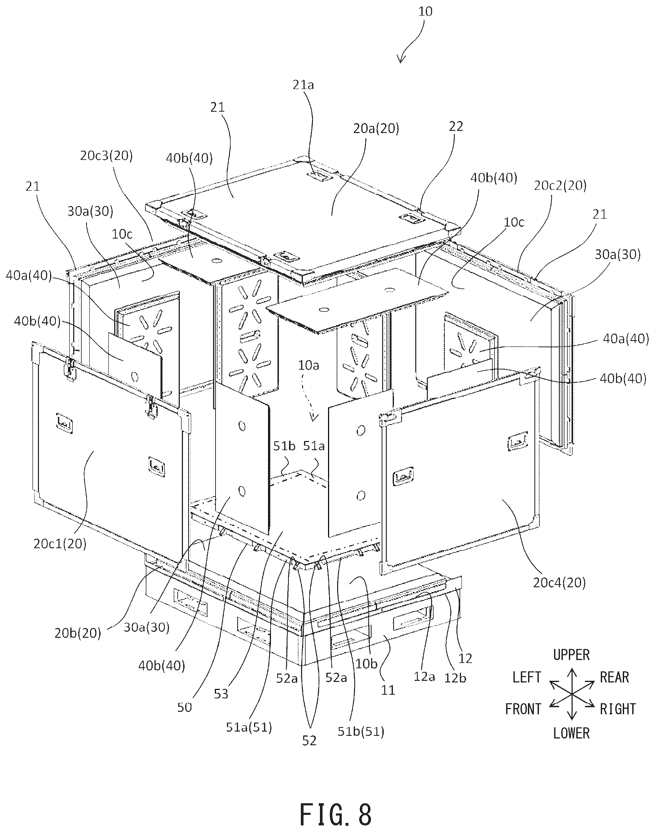

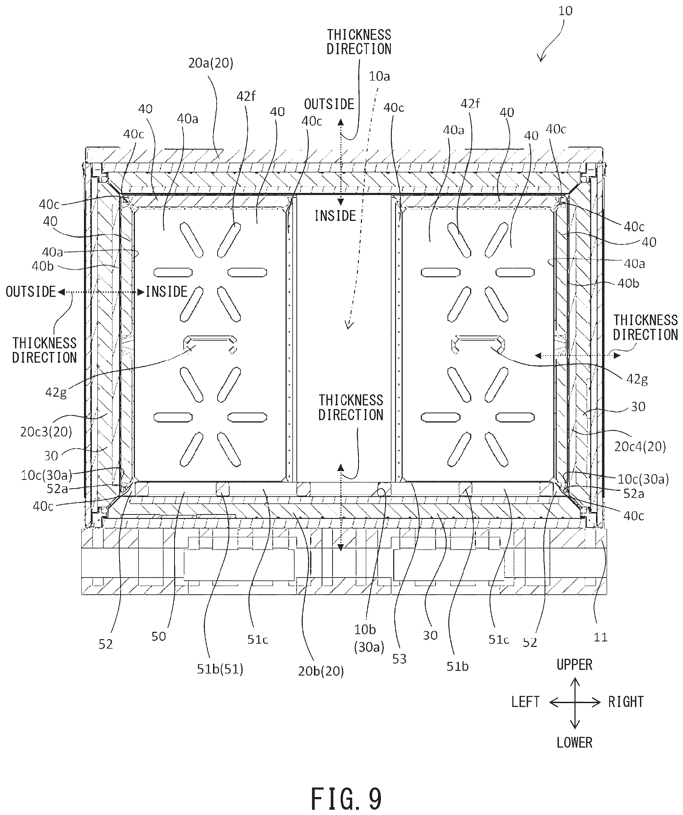

As shown in FIGS. 8 and 9, the insulated box 10 according to Embodiment 2 includes: a plurality of (ten, for example) thermal storage panels 40 that are located in the insulated space 10a and used as cold-retaining materials or heat-retaining materials; and a heat transfer body 50 located on a bottom surface 10b of the insulated box 10. The following will describe a case where the thermal storage panels 40 are used as the cold-retaining materials that maintains the insulated space 10a at a temperature lower than a predetermined temperature, such as an air temperature outside the insulated box 10 or a normal temperature (23 degrees, for example). However, the thermal storage panels 40 may be used as the heat-retaining materials that maintains the insulated space 10a at a temperature higher than the predetermined temperature. In accordance with a controlled temperature of an article, such as medicine, accommodated in the insulated box 10, the thermal storage panels 40 are frozen in a freezer, for example, at 5 degrees that is equal to or lower than the controlled temperature, and placed in the insulated space 10a.

The thermal storage panel 40 is smaller than the vacuum insulated panel 30 of the insulation board 20 forming the insulated box 10 and located at an inner side of the vacuum insulated panel 30 in the thickness direction. The thermal storage panel 40 includes a second outer surface 40b that is an outer surface opposed to the first inner surface 30a of the vacuum insulated panel 30 of the insulation board 20a in the insulated box 10. The plurality of thermal storage panels 40 include, for example, two upper thermal storage panels 40, two front thermal storage panels 40, two rear thermal storage panels 40, two left thermal storage panels 40, and two right thermal storage panels 40.

The two upper thermal storage panels 40 are lined up so as to be spaced apart from each other in the left-right direction. The second outer surfaces 40b of the upper thermal storage panels 40 are opposed to and in contact with the first inner surface 30a of the vacuum insulated panel 30 of the upper insulation board 20a. The two front thermal storage panels 40 are lined up so as to be spaced apart from each other in the left-right direction. The second outer surfaces 40b of the front thermal storage panels 40 are opposed to and in contact with the first inner surface 30a of the vacuum insulated panel 30 of the front insulation board 20c1. The two rear thermal storage panels 40 are lined up so as to be spaced apart from each other in the left-right direction. The second outer surfaces 40b of the rear thermal storage panels 40 are opposed to and in contact with the first inner surface 30a of the vacuum insulated panel 30 of the rear insulation board 20c2. The two left thermal storage panels 40 are lined up so as to be spaced apart from each other in a front-rear direction. The second outer surfaces 40b of the left thermal storage panels 40 are opposed to and in contact with the first inner surface 30a of the vacuum insulated panel 30 of the left insulation board 20c3. The two right thermal storage panels 40 are lined up so as to be spaced apart from each other in the front-rear direction. The second outer surfaces 40b of the right thermal storage panels 40 are opposed to and in contact with the first inner surface 30a of the vacuum insulated panel 30 of the right insulation board 20c4.

**Heat Transfer Body**

The heat transfer body 50 is made of a material having high thermal conductivity, such as a metal (aluminum, for example) or a resin. When the heat transfer body 50 is made of aluminum, the heat transfer body 50 is lightweight and has good thermal conductivity. This aluminum may contain another metal, i.e., may be an aluminum alloy. Moreover, the heat transfer body 50 includes a frame body 51, supports 52, and a mounting plate 53. The frame body 51 is located on the first inner surface 30a of the lower insulation board 20b which serves as the bottom surface 10b of the insulated box 10. The mounting plate 53 has a rectangular flat plate shape and is located on the frame body 51.

The frame body 51 includes a plurality of (in the example of FIG. 8, two) first extending portions 51a extending in the left-right direction and having a prism shape: and a plurality of (in the example of FIG. 8, six) second extending portions 51b extending in the front-rear direction and having a prism shape. The two first extending portions 51a are located so as to be spaced apart from each other in the front-rear direction. The six second extending portions 51b are located between the two first extending portions 51a so as to be spaced apart from each other in the left-right direction. Ends of the second extending portions 51b are connected to the first extending portions 51a. Thus, the frame body 51 includes spaces 51c surrounded by the first extending portions 51a and the second extending portions 51b, and this reduces the weight and cost of the heat transfer body 50.

The supports 52 are attached to the outer peripheral edge of the frame body 51. Each support 52 has a flat plate shape. Two supports 52 form a pair. For example, four pairs of supports 52 are attached to each of the outer peripheral edges of the first extending portions 51a so as to be spaced apart from each other along the first extending portions 51a. Moreover, four pairs of supports 52 are attached to each of the outer peripheral edges of the second extending portions 51b, which are located at ends among the six second extending portions 51b, so as to be spaced apart from each other along the second extending portions 51b.

The support 52 has, for example, a right triangular shape. The dimension of the support 52 projecting from the frame body 51 increases downward. One of adjacent sides of the support 52 extends in the upper-lower direction and is attached to the outer peripheral edge of the frame body 51, and the other adjacent side extends in the left-right direction or the front-rear direction and is opposed to the bottom surface 10b of the insulated box 10. A hypotenuse 52a of the support 52 is inclined at 45 degrees to each adjacent side. The hypotenuse 52a is inclined inward in the thickness direction as it extends upward. The hypotenuse 52a of each support 52 is opposed to one of the first inner surfaces 30a of the side wall insulation boards 20c1 to 20c4 which serve as side surfaces 10c of the insulated box 10. A gap between the hypotenuse 52a of the support 52 and the side surface 10c increases upward. The lower end portions of the front thermal storage panel 40, the rear thermal storage panel 40, the left thermal storage panel 40, and the right thermal storage panel 40 each including the second outer surface 40b opposed to the side surface 10c of the insulated box 10 among the thermal storage panels 40 are inserted into the gaps. Thus, these thermal storage panels 40 can be easily fixed to the insulated box 10.

Moreover, the heat transfer body 50 is sandwiched between the front thermal storage panels 40 and the rear thermal storage panels 40 in the front-rear direction and also sandwiched between the left thermal storage panels 40 and the right thermal storage panels 40 in the left-right direction. Thus, the two first extending portions 51a extend in the left-right direction that is the thickness direction of the left thermal storage panels 40 and the right thermal storage panels 40, and are lined up so as to be spaced apart from each other in the front-rear direction that is a direction orthogonal to the left-right direction. Moreover, the six second extending portions 51b extend in the front-rear direction that is the thickness direction of the front thermal storage panels 40 and the rear thermal storage panels 40. The six second extending portions 51b are lined up so as to be spaced apart from each other in the left-right direction that is a direction orthogonal to the front-rear direction.

Each of these thermal storage panels 40 includes: the second outer surface 40b opposed to the side surface 10c of the insulated box 10; and a second inclined surface 40c inclined relative to the second outer surface 40b. When the lower end portion of the thermal storage panel 40 is inserted into the gap between the side surface 10c of the insulated box 10 and the heat transfer body 50, the second inclined surface 40c of the thermal storage panel 40 is opposed to and contacts the hypotenuses 52a of the supports 52 of the heat transfer body 50. Thus, the thermal storage panel 40 is supported by the supports 52 and pushed by the side surface 10c of the insulated box 10. Therefore, the thermal storage panel 40 is stably fixed to the heat transfer body 50 and the insulated box 10.

Moreover, the heat transfer body 50 is cooled by the heat conduction from the heat transfer body 50 to the thermal storage panel 40. Thus, the insulated space 10a in which the thermal storage panels 40 and the heat transfer body 50 are located is cooled by the thermal storage panels 40 and the heat transfer body 50. Moreover, in the heat transfer body 50, convection occurs in the spaces 51c surrounded by the first extending portions 51a and the second extending portions 51b in the frame body 51 cooled by the thermal storage panels 40. Therefore, the mounting plate 53 covering the spaces 51c of the frame body 51 is uniformly cooled by the convection in the spaces 51c and the heat conduction of the frame body 51.

Since the article is placed on the mounting plate 53, the ease of work of storing the article into the insulated box 10 is improved. To be specific, for example, when the thermal storage panel 40 is frozen to -25°C in a freezer and is further adjusted in temperature in a temperature-controlled storage at 5°C, it takes a long time, such as 48 hours, for the thermal storage panel 40 to reach 5°C by the above freezing and the above temperature adjustment. Moreover, in a case where the freezing and the temperature adjustment are simultaneously performed in such a manner that the thermal storage panel 40 is left at rest in a warehouse at 5°C for a long period of time, it takes a further long time, such as 120 hours, for the thermal storage panel 40, which is left at rest (frozen and adjusted in temperature), to reach 5°C. On the other hand, the heat transfer body 50 is cooled by the thermal storage panels 40. Therefore, the article may be placed on the mounting plate 53 of the heat transfer body 50 after the thermal storage panels 40 are frozen and adjusted in temperature or may be placed on the mounting plate 53 while the thermal storage panels 40 are frozen and adjusted in temperature. As above, the article can be stored in the insulated box 10 without waiting for the freezing and the temperature adjustment of the thermal storage panels 40. Therefore, the ease of work of storing the article in the insulated box 10 can be improved.

In the above configuration, the heat transfer body 50 is located on the bottom surface 10b of the insulated box 10. However, instead of the heat transfer body 50, the thermal storage panel 40 may be located on the bottom surface 10b of the insulated box 10. Since the insulated space 10a is also cooled from below by this thermal storage panel 40, the temperature in the insulated space 10a can be made uniform.

**Thermal Storage Panel**

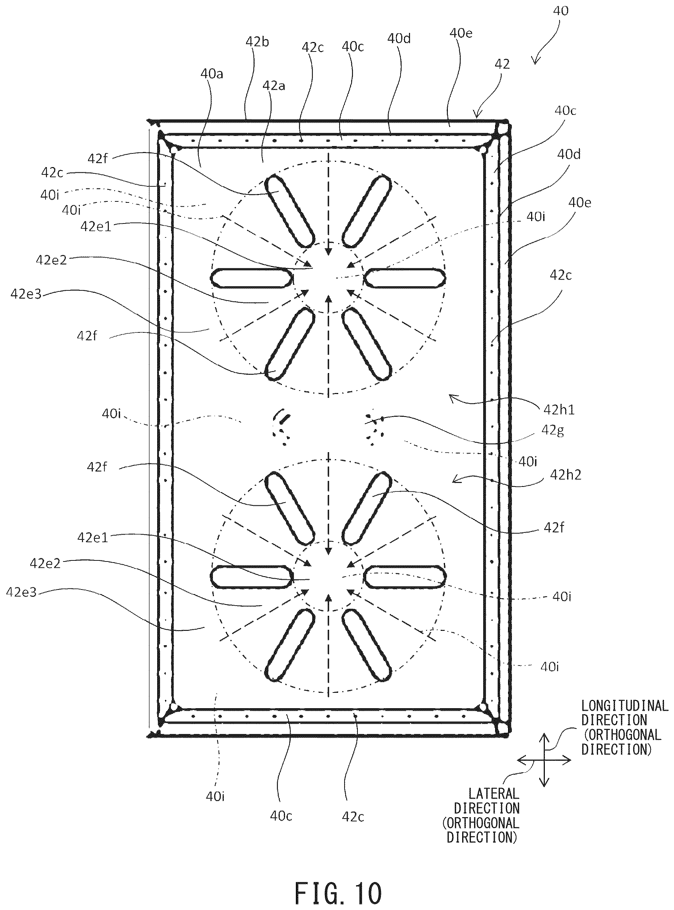

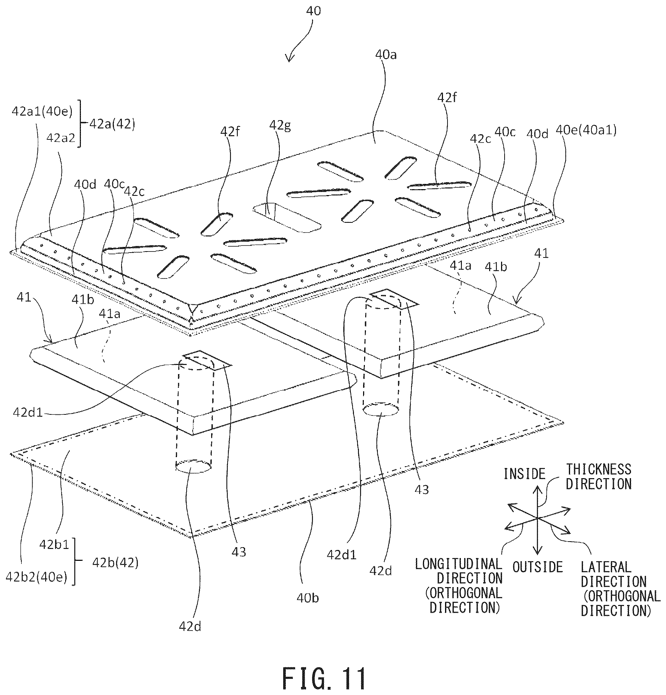

As shown in FIGS. 10 and 11, the thermal storage panel 40 has a truncated pyramid shape, such as a truncated quadrangular pyramid shape, and includes a second inner surface 40a, the second outer surface 40b, the second inclined surface 40c, and a second chamfered surface 40d. The second inner surface 40a is a first surface of the thermal storage panel 40. The second outer surface 40b is a second surface of the thermal storage panel 40, i.e., a surface located at an opposite side to the first surface across thermal storage packs 41 in the thickness direction orthogonal to the first surface.

The second inner surface 40a and the second outer surface 40b are rectangular and orthogonal to the thickness direction. The area of the second outer surface 40b is larger than the area of the second inner surface 40a. The second outer surface 40b is a surface opposite to the second inner surface 40a in the thickness direction among the surfaces of the thermal storage panel 40. The second outer surface 40b is opposed to and in contact with the first inner surface 30a of the vacuum insulated panel 30 in the insulated space 10a of the insulated box 10. When the thermal storage panel 40 is located such that the second outer surface 40b is opposed to the first inner surface 30a, the thickness direction of the thermal storage panel 40 is parallel to and the same as the thickness direction of the vacuum insulated panel 30.

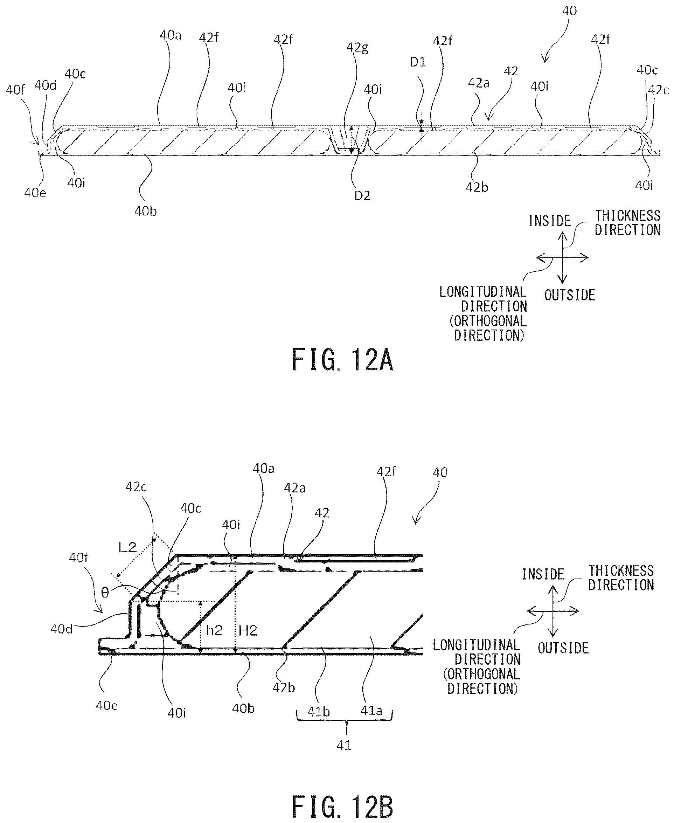

The outer end of the second chamfered surface 40d is connected to the outer peripheral edge of the second outer surface 40b. The second chamfered surface 40d extends inward in the thickness direction from the outer peripheral edge of the second outer surface 40b. A second flange 40e extends in the orthogonal directions from the outer peripheral edge of the second outer surface 40b. The outer end of the second inclined surface 40c is connected to the inner end of the second chamfered surface 40d. The inner end of the second inclined surface 40c is connected to the outer peripheral edge of the second inner surface 40a. The second inclined surface 40c is inclined relative to the thickness direction and the orthogonal directions. The inclination angle θ (FIG. 12B) of the second inclined surface 40c relative to the thickness direction is 45 degrees. By this second inclined surface 40c, the area of a section of the thermal storage panel 40 which is orthogonal to the thickness direction increases from the second inner surface 40a toward the second outer surface 40b in the thickness direction.

In a state where the thermal storage panels 40 are accommodated in the insulated space 10a of the insulated box 10, the second inclined surfaces 40c of the thermal storage panels 40 located adjacent to each other are opposed to each other. The upper thermal storage panel 40 are located adjacent to the front thermal storage panel 40, the rear thermal storage panel 40, the left thermal storage panel 40, and the right thermal storage panel 40. The second inclined surface 40c of the upper thermal storage panel 40 are opposed to the second inclined surfaces 40c of the front thermal storage panel 40, the rear thermal storage panel 40, the left thermal storage panel 40, and the right thermal storage panel 40. Moreover, the front thermal storage panel 40 is located adjacent to the left thermal storage panel 40 and the right thermal storage panel 40. The second inclined surface 40c of the front thermal storage panel 40 is opposed to the second inclined surfaces 40c of the left thermal storage panel 40 and the right thermal storage panel 40. Furthermore, the rear thermal storage panel 40 is located adjacent to the left thermal storage panel 40 and the right thermal storage panel 40. The second inclined surface 40c of the rear thermal storage panel 40 is opposed to the second inclined surfaces 40c of the left thermal storage panel 40 and the right thermal storage panel 40. These second inclined surfaces 40c opposed to each other contact each other, and these thermal storage panels 40 support each other and are fixed to the insulated box 10.

Since the thermal storage panel 40 includes the second inclined surface 40c as above, each of the angle of a corner between the second inner surface 40a and the second inclined surface 40c and the angle of a corner between the second inclined surface 40c and the second chamfered surface 40d is larger than 90 degrees. Thus, even if the corner of one of the thermal storage panels 40 hits another when assembling the thermal storage panels 40, the thermal storage panel 40 can be prevented from being damaged.

As shown in FIG. 12B, a dimension h2 of the second chamfered surface 40d in the thickness direction may satisfy a formula "$h2<(1-\sqrt{2}/2)H2$," where H2 denotes a dimension of the thermal storage panel 40 in the thickness direction. The dimension H2 is a dimension between the second inner surface 40a and the second outer surface 40b of the thermal storage panel 40 in the thickness direction. Thus, a dimension L2 between the outer end and the inner end of the second inclined surface 40c is larger than the dimension H2 of the thermal storage panel 40. Therefore, the thermal storage panels 40 located adjacent to each other can stably support each other.

Moreover, regarding the thermal storage panels 40 located adjacent to each other, the second chamfered surfaces 40d can prevent the second flanges 40e from contacting each other. To be specific, the corner between the second outer surface 40b and the second inclined surface 40c of the thermal storage panel 40 is chamfered, the second chamfered surface 40d is formed between the second outer surface 40b and the second inclined surface 40c, and a second chamfered space 40f is defined by the second chamfered surface 40d, an extended plane of the second outer surface 40b, and an extended plane of the second inclined surface 40c. For example, as shown in FIGS. 9 and 12B, in the upper thermal storage panel 40, the second flange 40e projecting leftward from the second outer surface 40b is accommodated in the second chamfered space 40f. Moreover, in the left thermal storage panel 40, the second flange 40e projecting upward from the second outer surface 40b is accommodated in the second chamfered space 40f. Therefore, the second flange 40e of the upper thermal storage panel 40 and the second flange 40e of the left thermal storage panel 40 do not hit each other, and the second inclined surface 40c of the upper thermal storage panel 40 and the second inclined surface 40c of the left thermal storage panel 40 are brought into contact with each other. Thus, these thermal storage panels 40 can be assembled.

As shown in FIG. 11, the thermal storage panel 40 includes two thermal storage packs 41 and a storage container 42 accommodating the two thermal storage packs 41. The number of thermal storage packs 41 accommodated in the storage container 42 is not limited to two and may be one or may be three or more.

Each thermal storage pack 41 includes a thermal storage agent 41a and a filling bag 41b filled with the thermal storage agent 41a. The thermal storage agent 41a is in a gel form and contains a thermal storage material, such as paraffin, salt hydrate, an organic compound, water, or any combination thereof. Since the thermal storage agent 41a is in a gel form, the thermal storage agent 41a can be prevented from leaking from the filling bag 41b.

The filling bag 41b is formed by a film made of resin. The film has a small thickness of, for example, 0.1 mm and has flexibility. The storage container 42 includes a wall made of resin. The thickness of the wall is larger than the thickness of the filling bag 41b and is, for example, 2 mm or more and 3 mm or less. The wall has rigidity. Since the filling bag 41b is accommodated in an accommodating space that is an internal space of the storage container 42, the filling bag 41b is protected by the wall of the storage container 42 which defines the accommodating space. Therefore, even when the filling bag 41b is thin, the filling bag 41b can be prevented from being damaged, and the thermal storage agent 41a can be prevented from leaking from the filling bag 41b.

The wall of the storage container 42 includes, for example, a second inner wall 42a and a second outer wall 42b. The second inner wall 42a has a truncated pyramid shape, such as a truncated quadrangular pyramid shape. The second inner wall 42a includes: a rectangular opening; a second inner wall flange portion 42a1 surrounding the opening; and a second inner wall recessed portion 42a2 that is recessed inward in the thickness direction from the second inner wall flange portion 42a1. Moreover, the second outer wall 42b has a rectangular flat plate shape and includes: a second covering portion 42b1 covering the opening of the second inner wall 42a; and a second outer wall flange portion 42b2 surrounding the second covering portion 42b1. The second outer wall flange portion 42b2 is the same in shape and size as the second inner wall flange portion 42a1. The second inner wall 42a is formed by, for example, vacuum forming. Therefore, the storage container 42 can be manufactured at low cost without using an expensive forming mold for blow molding, injection molding, or the like.

The thermal storage packs 41 are accommodated in the second inner wall recessed portion 42a2 through the opening of the second inner wall 42a in the storage container 42. When the dimension of the storage container 42 in one direction (lateral direction) among the orthogonal directions is larger than the dimension of the storage container 42 in another direction (longitudinal direction) among the orthogonal directions, the two thermal storage packs 41 are lined up in the longitudinal direction. Then, the opening of the second inner wall 42a is covered with the second covering portion 42b1 of the second outer wall 42b, and the second inner wall flange portion 42a1 and the second outer wall flange portion 42b2 are stacked on each other and subjected to thermal welding. The second flange 40e of the thermal storage panel 40 is formed by the second inner wall flange portion 42a1 and the second outer wall flange portion 42b2 which have been subjected to the thermal welding. Moreover, the second inner surface 40a, the second inclined surface 40c, and the second chamfered surface 40d of the thermal storage panel 40 are formed by, among surfaces of the second inner wall recessed portion 42a2 of the second inner wall 42a, a surface opposite to a surface opposed to the second outer wall 42b in the thickness direction. Furthermore, the second outer surface 40b of the thermal storage panel 40 is formed by, among surfaces of the second covering portion 42b1 of the second outer wall 42b, a surface opposite to a surface opposed to the second inner wall 42a in the thickness direction.

The storage container 42 includes: a plurality of first through holes 42c penetrating the second inner wall 42a; and second through holes 42d penetrating the second outer wall 42b. The accommodating space surrounded by the wall of the storage container 42 and the outside of the storage container 42 communicate with each other through the first through holes 42c and the second through holes 42d. Since each first through hole 42c is smaller than each second through hole 42d, the fingers of the user, the articles in the insulated box 10, and the like hardly hit the thermal storage packs 41 in the storage container 42 through the first through holes 42c. Therefore, the thermal storage packs 41 can be prevented from being damaged.

Moreover, as shown in FIGS. 12A and 12B, a gap as an air passage 40i is located between each thermal storage pack 41 and the second inner wall 42a of the storage container 42 and/or between each thermal storage pack 41 and the second outer wall 42b of the storage container 42. The first through holes 42c communicate with the passage 40i. Therefore, when freezing the thermal storage packs 41 in the freezer, cold air flows from the first through holes 42c through the passage 40i to the thermal storage packs 41 and cools the thermal storage packs 41. Since the cold air contacts the thermal storage packs 41 as above, a time required to freeze the thermal storage packs 41 is reduced. Furthermore, the film of the filling bag 41b of the thermal storage pack 41 is smaller in thickness than each of the second inner wall 42a and the second outer wall 42b of the storage container 42. Therefore, the film of the filling bag 41b is higher in thermal conductivity than each of the second inner wall 42a and the second outer wall 42b of the storage container 42. Thus, the time required to freeze the thermal storage packs 41 is reduced.

After the thermal storage packs 41 are frozen in the freezer, the thermal storage packs 41 are adjusted in temperature in the temperature-controlled storage. As with the freezing, a time required to adjust the temperatures of the thermal storage packs 41 is also reduced since the storage container 42 includes the first through holes 42c and the passage 40i. Moreover, in a case where the freezing and the temperature adjustment are simultaneously performed in such a manner that the thermal storage packs 41 are left at rest in a warehouse at 5°C for a long period of time, it takes a long time, such as 120 hours, for the thermal storage packs 41 to reach 5°C when the storage container 42 does not include the first through holes 42c. However, when the storage container 42 includes the first through holes 42c and the passage 40i, the above time can be significantly reduced to 48 hours.

Moreover, the first through holes 42c are located on the second inclined surface 40c. Therefore, as compared to when the first through holes 42c are located on the second inner surface 40a, the fingers of the user, the articles, and the like hardly contact the thermal storage packs 41 in the storage container 42 through the first through holes 42c. Thus, even when the filling bag 41b of the thermal storage pack 41 is thin, the filling bag 41b can be prevented from being damaged, and the thermal storage agent 41a can be prevented from leaking from the filling bag 41b.

As shown in FIG. 11, the second through holes 42d are located on the second outer surface 40b of the second outer wall 42b of the storage container 42. Each second through hole 42d is located so as to be opposed to the middle of the corresponding thermal storage pack 41 in the orthogonal directions. The second through hole 42d penetrates the second outer wall 42b of the storage container 42. Therefore, the frozen state of the thermal storage pack 41 can be easily conformed by observing the thermal storage pack 41 in the storage container 42 through the second through hole 42d.

Moreover, since the second through hole 42d is larger than the first through hole 42c, the thermal storage pack 41 is easily observed through the second through hole 42d. Furthermore, in the insulated box 10, the second outer surface 40b including the second through holes 42d is opposed to the second inner surface 40a of the insulated box 10. Therefore, even when the second through holes 42d are large, the fingers of the user, the articles, and the like hardly hit the thermal storage packs 41 through the second through holes 42d. Thus, the thermal storage packs 41 can be prevented from being damaged.

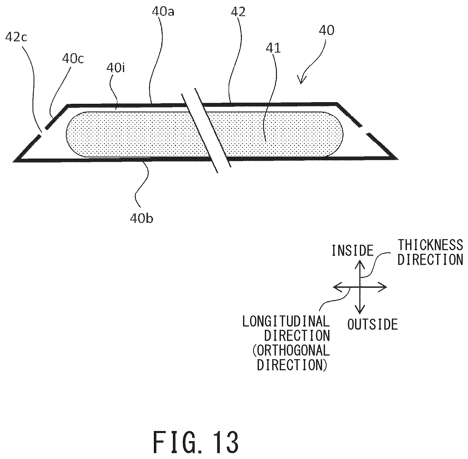

As shown in FIG. 13, the thermal storage panel 40 does not have to include the second chamfered surface 40d. In this case, the thermal storage panel 40 includes the second inner surface 40a, the second outer surface 40b, and the second inclined surface 40c. The outer end of the second inclined surface 40c is connected to the outer peripheral edge of the second outer surface 40b, and the inner end of the second inclined surface 40c is connected to the outer peripheral edge of the second inner surface 40a. Moreover, the wall of the storage container 42 of the thermal storage panel 40 is formed by, for example, blow molding, and the second flange 40e is not located between the second inclined surface 40c and the second outer surface 40b. Therefore, when assembling the thermal storage panels 40 even in a case where each thermal storage panel 40 does not include the second chamfered surface 40d, the second inclined surfaces 40c of the thermal storage panels 40 located adjacent to each other can be located so as to be opposed to each other.

**Second Recess**

Moreover, as shown in FIGS. 11 and 12A, the second inner wall 42a of the storage container 42 includes first recesses 42f and a second recess 42g which are recessed from the second inner surface 40a outward in the thickness direction. In the thickness direction, a dimension D2 between the second inner surface 40a and the bottom of the second recess 42g is larger than a dimension D1 between the second inner surface 40a and the bottom of the first recess 42f. Furthermore, the second recess 42g is located at the middle of the storage container 42 in the longitudinal direction and extends in the lateral direction. Since the second recess 42g is used as a handle of the thermal storage panel 40, the thermal storage panel 40 is easily carried.

Moreover, the two thermal storage packs 41 are accommodated in the storage container 42 so as to sandwich the second recess 42g in the longitudinal direction. Therefore, the movements and deformations of the thermal storage packs 41 are suppressed by the second recess 42g. Thus, the thermal storage packs 41 are prevented from deforming, i.e., increasing in thickness, and the time required to freeze the thermal storage packs 41 is prevented from increasing. Furthermore, the first through holes 42c are prevented from being closed by the thermal storage packs 41 due to the movements of the thermal storage packs 41, and the time required to freeze the thermal storage packs 41 is prevented from increasing.

Moreover, as shown in FIG. 10, the second recess 42g is located at the middle of the storage container 42 in the lateral direction, and the dimension of the second recess 42g in the lateral direction is smaller than the dimension of the storage container 42 in the lateral direction. Therefore, two air passages 40i are located in the storage container 42 so as to sandwich the second recess 42g in the lateral direction. The passages 40i are located between the second inner wall 42a and the second outer wall 42b of the storage container 42 and between the second inner wall 42a and the thermal storage pack 41. By these passages 40i, the accommodating space of a first accommodating region 42h1 and the accommodating space of a second accommodating region 42h2 communicate with each other. The first accommodating region 42h1 is a region of the storage container 42 which is located at one side of the second recess 42g in the longitudinal direction, and the second accommodating region 42h2 is a region of the storage container 42 which is located at the other side of the second recess 42g in the longitudinal direction. Thus, the cold air smoothly flows through the accommodating spaces in the storage container 42, and therefore, the time required to freeze the thermal storage packs 41 in the storage container 42 can be reduced.

**First Recess**

As shown in FIG. 12A, the thermal storage packs 41 sandwiched between the second inner wall 42a and the second outer wall 42b of the storage container 42 in the thickness direction are pushed toward the second outer wall 42b by the first recesses 42f recessed from the second inner surface 40a of the second inner wall 42a. Thus, the movements and deformations of the thermal storage packs 41 are suppressed. Therefore, the increases in the thicknesses of the thermal storage packs 41 due to the deformations of the thermal storage packs 41 are suppressed, and the time required to freeze the thermal storage packs 41 is prevented from increasing. Moreover, the first through holes 42c are prevented from being closed by the thermal storage packs 41 due to the movements of the thermal storage packs 41, and the time required to freeze the thermal storage packs 41 is prevented from increasing.

Moreover, as shown in FIG. 10, each of the first accommodating region 42h1 and the second accommodating region 42h2 of the storage container 42 includes: a middle region 42e1; a first outer peripheral region 42e2 surrounding the middle region 42e1; and a second outer peripheral region 42e3 surrounding the first outer peripheral region 42e2. Each middle region 42e1 includes a middle position of the accommodating region 42h1 or 42h2 in the orthogonal directions and has a circular shape. The second inner wall 42a of the middle region 42e1 is opposed to the middle of the thermal storage pack 41. The first recesses 42f are not located on the second inner wall 42a of the middle region 42e1, and the air passage 40i is located between the second inner wall 42a of the middle region 42e1 and the thermal storage pack 41. The middle of the thermal storage pack 41 is difficult to freeze. However, the time required to freeze the thermal storage packs 41 is reduced by the cold air flowing through the passage 40i of the middle region 42e1 corresponding to the middle of the thermal storage pack 41.

Moreover, the second outer peripheral region 42e3 is located between the first outer peripheral region 42e2 and the second inclined surface 40c in the orthogonal directions. The first recesses 42f are not located on the second inner wall 42a of the second outer peripheral region 42e3, and the air passage 40i is located between the second inner wall 42a of the second outer peripheral region 42e3 and the thermal storage pack 41. The passage 40i extends along the second inclined surface 40c over the entire periphery in the storage container 42. Moreover, the first through holes 42c are located on the second inclined surface 40c so as to be spaced apart from each other along the inner end of the second inclined surface 40c and communicate with the passage 40i of the second outer peripheral region 42e3. Therefore, the cold air flows through the first through holes 42c into the passage 40i of the second outer peripheral region 42e3 and then flows through the passage 40i over the entire periphery in the storage container 42. Thus, the time required to freeze the thermal storage packs 41 in the storage container 42 is reduced.

Moreover, the first outer peripheral region 42e2 has an annular shape and includes a plurality of (in the example of FIG. 10, six) first recesses 42f. The six first recesses 42f extend radially from the middle region 42e1 toward the second outer peripheral region 42e3. The air passage 40i is located between the first recesses 42f located adjacent to each other and between the second inner wall 42a of the first outer peripheral region 42e2 and the thermal storage pack 41. The passage 40i of the first outer peripheral region 42e2 communicates with the passage 40i of the middle region 42e1 and also communicates with the first through holes 42c through the passage 40i of the second outer peripheral region 42e3. Therefore, the cold air flows through the first through holes 42c into the passage 40i of the second outer peripheral region 42e3 and flows into the passage 40i of the middle region 42e1 through the passage 40i of the first outer peripheral region 42e2. Thus, the time required to freeze the middle of the thermal storage pack 41 which is difficult to freeze is reduced.

**Determination Mark**

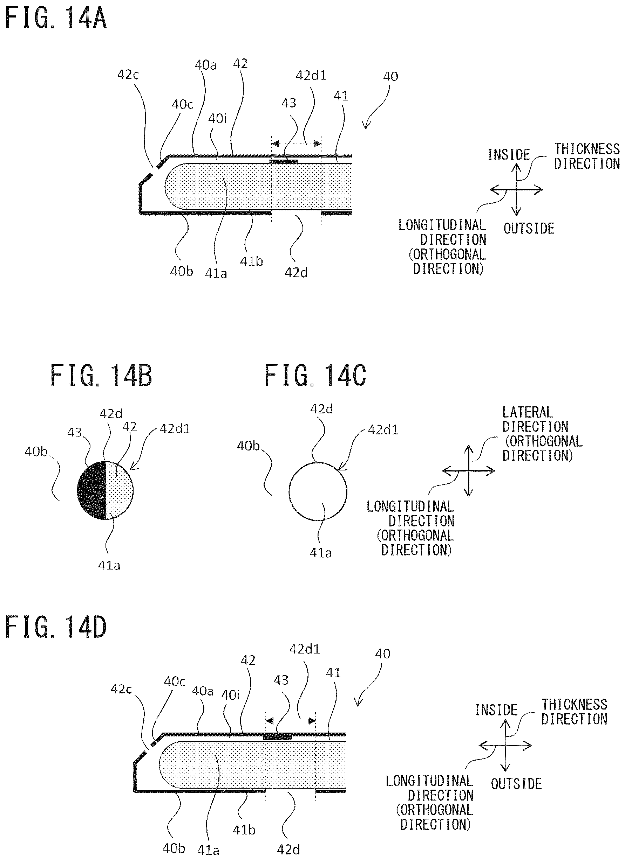

As shown in FIG. 14A, a determination mark 43 based on which the frozen state of the thermal storage agent 41a is determined is located on the thermal storage panel 40. The determination mark 43 is located on the filling bag 41b at the inner side of the thermal storage agent 41a in the thickness direction, in an overlapping region 42d1 that is a region overlapping the second through hole 42d when viewed in the thickness direction in the thermal storage panel 40. The determination mark 43 is, for example, an image printed on the filling bag 41b, a tape attached to the filling bag 41b, or the like. The determination mark 43 has a highly visible color, such as black. Moreover, the filling bag 41b is transparent or translucent. The degree of transparency of the thermal storage agent 41a changes depending on the frozen state. For example, when the thermal storage agent 41a is not frozen, it is transparent or translucent. As the thermal storage agent 41a freezes, the degree of transparency decreases. When the thermal storage agent 41a is frozen, it becomes opaque, such as white.

The thermal storage agent 41a is located between the determination mark 43 and the second through hole 42d in the thickness direction. Therefore, as shown in FIG. 14B, when the thermal storage agent 41a is not in a frozen state, the determination mark 43 can be visually confirmed from the second through hole 42d through the thermal storage agent 41a. On the other hand, as shown in FIG. 14C, when the thermal storage agent 41a is in a frozen state, it is difficult or impossible to visually confirm the determination mark 43 from the second through hole 42d through the thermal storage agent 41a. Whether or not the thermal storage agent 41a is in a frozen state can be easily determined based on the visibility of the determination mark 43. Therefore, the thermal storage agent 41a in an unfrozen state is prevented from being accommodated in the insulated space 10a, and a cold-retaining time of the insulated space 10a by the thermal storage agent 41a can be prevented from becoming shorter than a predetermined period of time.

Moreover, as shown in FIG. 14A, the determination mark 43 is located in a region that is part (in the example of FIG. 14B, half) of the overlapping region 42d1, and is different in color from the wall of the storage container 42. Therefore, when the thermal storage agent 41a is not in a frozen state, the determination mark 43 and the storage container 42 can be visually confirmed from the second through hole 42d through the thermal storage agent 41a. When the determination mark 43 is located in part of the overlapping region 42d1, the decrease in the visibility of the determination mark 43 due to the decrease in the degree of transparency of the thermal storage agent 41a can be determined more easily by the color contrast between the determination mark 43 and the storage container 42 than when the determination mark 43 is located in the entire overlapping region 42d1. Therefore, whether or not the thermal storage agent 41a is in a frozen state can be easily determined based on the result of this determination.

The position of the determination mark 43 is not limited to the filling bag 41b as long as it is such a position that the determination mark 43 can be visually confirmed from the second through hole 42d through the thermal storage agent 41a. For example, as shown in FIG. 14D, the determination mark 43 may be located on a surface of the second inner wall 42a of the storage container 42 which is opposed to the thermal storage pack 41, in the overlapping region 42d1 overlapping the second through hole 42d when viewed in the thickness direction. Also in this case, since the thermal storage agent 41a is located between the determination mark 43 and the second through hole 42d in the thickness direction, whether or not the thermal storage agent 41a is frozen can be easily determined based on the visibility of the determination mark 43.

The above embodiments may be combined with each other as long as they do not exclude each other. From the foregoing explanation, many modifications and other embodiments of the present disclosure are obvious to one skilled in the art. Therefore, the foregoing explanation should be interpreted only as an example and is provided for the purpose of teaching the best mode for carrying out the present disclosure to one skilled in the art. The structures and/or functional details may be substantially modified within the scope of the present disclosure.

**Additional Information**

The following technologies are disclosed by Embodiments and Modified Examples described above.

A first technology is a thermal storage panel including: a thermal storage pack including a filling bag that is made of a film and filled with a thermal storage agent; and a storage container accommodating the thermal storage pack, wherein: the storage container includes a wall that is larger in thickness than the film and defines a space accommodating the thermal storage pack; an air passage is located between the wall and the thermal storage pack; and the wall includes a first through hole through which the passage and an outside of the storage container communicate with each other.

According to this configuration, since the wall of the storage container is thick, the storage container has rigidity and protects the thermal storage pack in the storage container from external force. Therefore, the thermal storage pack can be prevented from being damaged. Moreover, the thermal storage agent in the thin filling bag is cooled by the cold air flowing into the air passage in the storage container through the first through hole located on the wall of the storage container. Therefore, the time required to freeze the thermal storage pack is reduced.

A second technology is the thermal storage panel according to the first technology, wherein: the storage container includes a first surface, a second surface that is a surface located at an opposite side to the first surface across the thermal storage pack in a thickness direction orthogonal to the first surface, and an inclined surface inclined relative to the thickness direction such that an area of a section of the thermal storage panel which is orthogonal to the thickness direction increases from the first surface toward the second surface; and the first through hole is located on the inclined surface.

According to this configuration, since the first through hole is located on the inclined surface, the fingers of the user, the articles, and the like can be prevented from contacting the thermal storage pack in the storage container through the first through hole, as compared to when the first through hole is located on the first surface or the second surface. Thus, the thermal storage pack can be prevented from being damaged. Moreover, for example, the thermal storage panel is accommodated in the insulated box such that the second surface of the thermal storage panel is opposed to the inner surface of the insulated box. In this case, since the first through hole is located on the inclined surface, the cold air easily flows into the storage container through the first through hole, as compared to when the first through hole is located on the second surface. Therefore, the time required to freeze the thermal storage pack in the storage container by the cold air is reduced.

A third technology is the thermal storage panel according to the second technology, wherein: the storage container includes a middle region corresponding to a middle of the thermal storage pack in a direction orthogonal to the thickness direction, an outer peripheral region surrounding the middle region, and a plurality of recesses that are recessed from the first surface in the outer peripheral region; and an air passage between the recesses located adjacent to each other communicates with the first through hole and an air passage between the wall of the middle region and the thermal storage pack.

According to this configuration, the thermal storage pack in the storage container is pushed by the recesses of the storage container, and this suppresses the deformation and movement of the thermal storage pack. Thus, the thermal storage pack is prevented from increasing in thickness, and the first through hole is prevented from being closed by the thermal storage pack. Therefore, the time required to freeze the thermal storage pack can be prevented from increasing. Moreover, the thermal storage pack spreads larger, and the cooling effect by the thermal storage pack can be further made uniform.

Moreover, the air passage between the recesses located adjacent to each other communicates with the first through hole and the air passage in the middle region. Therefore, the cold air flows from the first through hole into the storage container and passes through the passage between the recesses and the passage in the middle region in order. By this cold air, the middle of the thermal storage pack 41 which is difficult to freeze in the middle region is cooled. Therefore, the time required to freeze the thermal storage pack is reduced.

A fourth technology is the thermal storage panel according to any one of the first to third technologies, further including a determination mark based on which a frozen state of the thermal storage agent is determined, wherein: the storage container includes a first surface and a second through hole located such that the thermal storage agent is sandwiched between the second through hole and the determination mark in a thickness direction orthogonal to the first surface; and a degree of transparency of the thermal storage pack in which the thermal storage agent is frozen is lower than a degree of transparency of the thermal storage pack in which the thermal storage agent is not frozen.

According to this configuration, the thermal storage agent is located between the second through hole and the determination mark in the thickness direction. Since the degree of transparency of the thermal storage agent decreases as the thermal storage agent freezes, the determination mark becomes difficult to visually confirm. Thus, the frozen state of the thermal storage agent can be easily determined based on the visibility of the determination mark.

A fifth technology is the thermal storage panel according to the fourth technology, wherein the determination mark is located in part of a region overlapping the second through hole when viewed in the thickness direction, on the storage container or the filling bag.

According to this configuration, when the thermal storage agent is not in a frozen state, the determination mark and the wall of the storage container are visible from the second through hole through the thermal storage agent, and the state of the determination mark is easily determined based on the contrast between the color of the determination mark and the color of the wall of the storage container. Thus, since the determination mark becomes invisible or difficult to see as the

# EP 4 725 869 A1

thermal storage agent freezes, the frozen state of the thermal storage agent can be easily determined.

## Reference Signs List

[0118]

| 40 | thermal storage panel |
| 40a | second inner surface (first surface) |
| 40b | second outer surface (second surface) |
| 40c | second inclined surface (inclined surface) |
| 40i | passage |
| 41 | thermal storage pack |
| 41a | thermal storage agent |
| 41b | filling bag |
| 42 | storage container |
| 42c | first through hole |
| 42d | second through hole |
| 42d1 | region |
| 42e1 | middle region |
| 42e2 | first outer peripheral region (outer peripheral region) |
| 42f | first recess (recess) |
| 43 | determination mark |

## Claims

1.  A thermal storage panel comprising:

    a thermal storage pack including a filling bag that is made of a film and filled with a thermal storage agent; and
    a storage container accommodating the thermal storage pack, wherein:

    the storage container includes a wall that is larger in thickness than the film and defines a space accommodating the thermal storage pack;
    an air passage is located between the wall and the thermal storage pack; and
    the wall includes a first through hole through which the passage and an outside of the storage container communicate with each other.

2.  The thermal storage panel according to claim 1, wherein:

    the storage container includes

    a first surface,
    a second surface that is a surface located at an opposite side to the first surface across the thermal storage pack in a thickness direction orthogonal to the first surface, and
    an inclined surface inclined relative to the thickness direction such that an area of a section of the thermal storage panel which is orthogonal to the thickness direction increases from the first surface toward the second surface; and

    the first through hole is located on the inclined surface.

3.  The thermal storage panel according to claim 2, wherein:

    the storage container includes

    a middle region corresponding to a middle of the thermal storage pack in a direction orthogonal to the thickness direction,
    an outer peripheral region surrounding the middle region, and
    a plurality of recesses that are recessed from the first surface in the outer peripheral region; and

18

an air passage between the recesses located adjacent to each other communicates with the first through hole and an air passage between the wall of the middle region and the thermal storage pack.

4. The thermal storage panel according to any one of claims 1 to 3, further comprising a determination mark based on which a frozen state of the thermal storage agent is determined, wherein:

the storage container includes

a first surface and
a second through hole located such that the thermal storage agent is sandwiched between the second through hole and the determination mark in a thickness direction orthogonal to the first surface; and

a degree of transparency of the thermal storage pack in which the thermal storage agent is frozen is lower than a degree of transparency of the thermal storage pack in which the thermal storage agent is not frozen.

5. The thermal storage panel according to claim 4, wherein the determination mark is located in part of a region overlapping the second through hole when viewed in the thickness direction, on the storage container or the filling bag.

FIG. 1

FIG. 2

FIG. 3

FIG. 4

25

d1

FIG. 5A

25

B

d2

B

FIG. 5B

25

d3

FIG. 5C

FIG. 6A

FIG. 6C

FIG. 6B

FIG. 6D

LONGITUDINAL DIRECTION
(ORTHOGONAL DIRECTION)

LATERAL DIRECTION
(ORTHOGONAL DIRECTION)

FIG. 7

FIG. 8

FIG. 9

FIG. 10

FIG. 11

FIG. 12A

FIG. 12B

FIG. 13

# FIG. 14A

INSIDE — THICKNESS DIRECTION

LONGITUDINAL DIRECTION (ORTHOGONAL DIRECTION)    OUTSIDE

# FIG. 14B

# FIG. 14C

LATERAL DIRECTION (ORTHOGONAL DIRECTION)

LONGITUDINAL DIRECTION (ORTHOGONAL DIRECTION)

# FIG. 14D

INSIDE — THICKNESS DIRECTION

LONGITUDINAL DIRECTION (ORTHOGONAL DIRECTION)    OUTSIDE

## INTERNATIONAL SEARCH REPORT

| International application No. |
|---|
| **PCT/JP2024/008438** |

### A. CLASSIFICATION OF SUBJECT MATTER

***B65D 81/38***(2006.01)i; ***F25D 3/00***(2006.01)i; ***F28D 20/02***(2006.01)i
FI:   B65D81/38 Q; F25D3/00 E; F28D20/02 D

According to International Patent Classification (IPC) or to both national classification and IPC

### B. FIELDS SEARCHED

Minimum documentation searched (classification system followed by classification symbols)

B65D81/38; F25D3/00; F28D20/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 10-37336 A (KUBOTA CORPORATION) 10 February 1998 (1998-02-10) paragraphs [0019]-[0020], fig. 6-7, 10 | 1-3 |
| A | | 4-5 |
| A | JP 10-54092 A (KUBOTA CORPORATION) 24 February 1998 (1998-02-24) | 1-5 |
| A | JP 3168321 U (NASACORE CO., LTD.) 09 June 2011 (2011-06-09) | 1-5 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **09 April 2024** | **23 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/008438**

| Patent document cited in search report | | | Publication date (day/month/year) | Patent family member(s) | Publication date (day/month/year) |
|---|---|---|---|---|---|
| JP | 10-37336 | A | 10 February 1998 | (Family: none) | |
| JP | 10-54092 | A | 24 February 1998 | (Family: none) | |
| JP | 3168321 | U | 09 June 2011 | (Family: none) | |

Form PCT/ISA/210 (patent family annex) (July 2022)

REFERENCES CITED IN THE DESCRIPTION

**Patent documents cited in the description**

- JP 2000334813 A